# EUROPEAN PATENT SPECIFICATION

(11) **EP 1 768 534 B1**
(45) Date of publication and mention of the grant of the patent: **02.01.2008**
(21) Application number: 05758572.1
(22) Date of filing: 23.06.2005
(51) Int. Cl.: A47J 31/44, A47J 31/06

(54) **COFFEE PERCOLATOR**
KAFFEEFILTERGERÄT
CAFETIERE A PERCOLATION

(30) Priority: 29.06.2004 IT TO20040443
(43) Date of publication of application: 04.04.2007
(73) Proprietor: SGL Italia S.r.l. con unico socio, 10156 Torino (TO) (IT)
(72) Inventor: CORTESE, Virginio, I-10100 TORINO (IT)
(74) Representative: Jorio, Paolo
(86) International application number: PCT/EP2005/052953
(87) International publication number: WO 2006/003117

(56) References cited:
- EP-A- 1 034 729
- WO-A-02/051290
- US-A- 5 870 943

## Description

### TECHNICAL FIELD

The present invention relates to a coffee percolator.

More specifically, the present invention relates to a coffee percolator of the type having a vertical axis and comprising a pressurized-hot-water dispensing assembly having an outlet coaxial with said axis; a fixed annular body coaxial with said axis and positioned with a top surface facing said outlet and a bottom surface facing away from said outlet; a percolating cup, which engages the annular body; and a bayonet joint for connecting the percolating cup to the annular body coaxially with said axis and facing said outlet.

A coffee percolator of this type is disclosed in WO-A-02/0571290.

Other coffee percolators are disclosed in EP-A-1034729 and US-P-5870943.

### BACKGROUND ART

In coffee percolators of the type described above, the bayonet joint normally comprises two helical grooves formed on an outer wall of the percolating cup, and which are engaged by respective pins projecting radially from an inner lateral surface of the annular body. The helical grooves are normally closed at the top ends so that the pins, once engaged inside the respective grooves when assembling the percolator, connect the percolating cup permanently to the annular body, and slide, in use, along the grooves to allow the percolating cup to move, with respect to the annular body and in a substantially vertical direction, to and from an operating position connected to the pressurized-hot-water outlet.

In known percolators of the type described above, the vertical movement and - since the percolating cup cannot be removed from the annular body - the gap formed between the outlet and the percolating cup, when the percolating cup is withdrawn from the operating position, are necessarily small, so that the percolating cup can only be loaded with a fairly thin wafer, and definitely not loose ground coffee or a relatively thick rigid capsule.

### DISCLOSURE OF INVENTION

It is an object of the present invention to provide a percolator of the type described above, designed to produce coffee from a wafer, from a rigid capsule, and from a measure of loose ground coffee, and which at the same time is cheap and easy to produce.

According to the present invention, there is provided a coffee percolator, as claimed in Claim 1 and, preferable, in any one of the following Claims depending directly or indirectly on Claim 1.

### BRIEF DESCRIPTION OF THE DRAWINGS

A non-limiting embodiment of the invention will be described by way of example with reference to the accompanying drawings, in which:
Figure 1 shows a partly sectioned side view of a preferred embodiment of the percolator according to the present invention;
Figure 2 shows a section along line II-II in Figure 1;
Figure 3 is similar to Figure 1 and shows the percolator in a different operating configuration;
Figure 4 shows a section along line IV-IV in Figure 3.

### BEST MODE FOR CARRYING OUT THE INVENTION

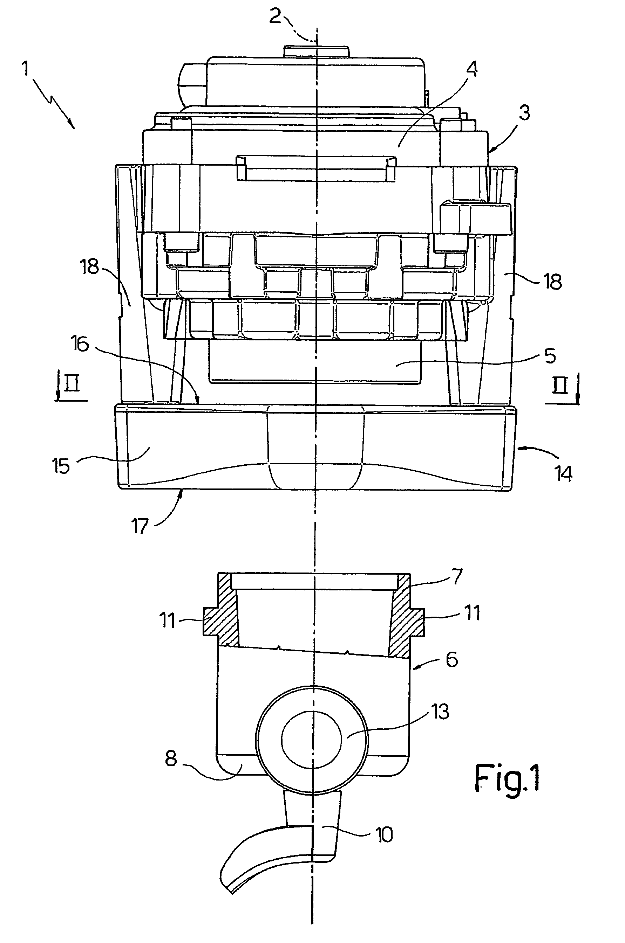

Number 1 in Figure 1 indicates as a whole a coffee percolator, which extends along a vertical axis 2, and comprises a pressurized-hot-water dispensing assembly 3 in turn comprising a boiler 4, and a sprinkler 5 fitted to boiler 4, coaxially with axis 2, and defining an outlet of dispensing assembly 3.

Percolator 1 also comprises a percolating cup 6 defined by a cup-shaped body comprising a cylindrical lateral wall 7 closed at one end by a bottom wall 8, through which is formed a discharge conduit 9 communicating with a coffee dispensing device 10. Cylindrical lateral wall 7 has two diametrically-opposite, outer radial appendixes 11 located close to a free edge of percolating cup 6 and forming part of a bayonet joint 12 which, as explained in detail below, locks percolating cup 6 axially and angularly in an operating position, in which percolating cup 6 faces dispensing assembly 3, with the free edge of the percolating cup contacting sprinkler 5.

Percolating cup 6 is fitted with a handle 13 extending radially outwards from lateral wall 7.

As regards percolating cup 6, it should be pointed out that, in the example shown, lateral wall 7 is high enough for percolating cup 6 to house a rigid container of ground coffee.

In other embodiments not shown, percolating cup 6 is loaded with a known wafer (not shown) of ground coffee, or with a measure of loose ground coffee. Since, in both these cases, percolating cup 6 would be deeper than necessary, percolator 1 is equipped with a known auxiliary filtering element (not shown), which is insertable at least partly inside percolating cup 6, coaxially with axis 2, to reduce the depth of percolating cup 6.

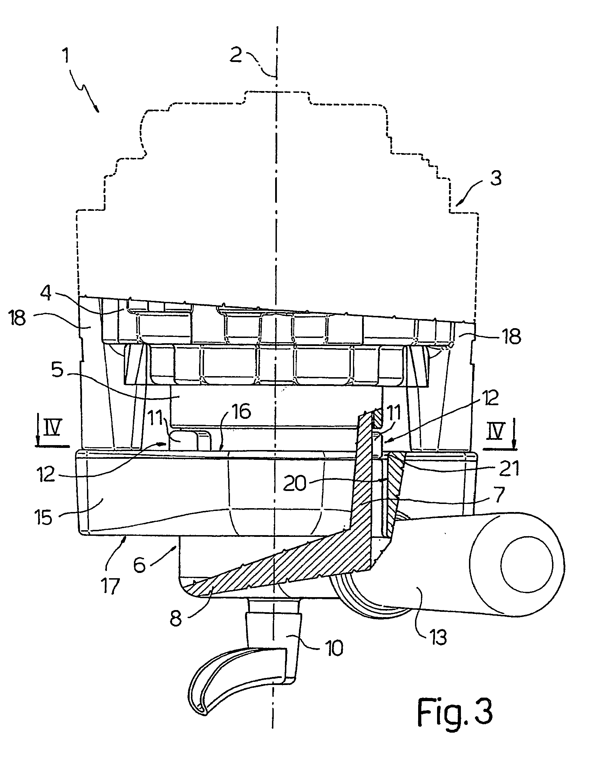

With reference to Figures 1 and 3, percolator 1 comprises a device 14 for supporting and locking percolating cup 6 in said operating position, and in turn comprising an annular body 15, which is positioned facing sprinkler 5, coaxially with axis 2, is bounded at the top and bottom respectively by two flat surfaces 16 and 17 crosswise to axis 2, and is fitted to dispensing assembly 3 by two columns 18 extending upwards from surface 16 and connected rigidly at their top ends to a supporting ring integral with boiler 4.

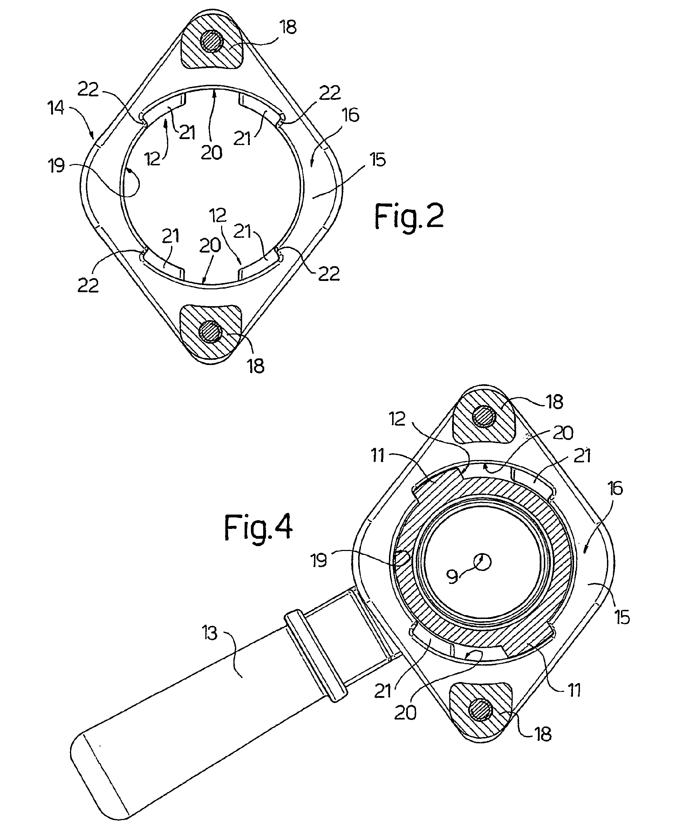

As shown in Figures 2 and 4, annular body 15 is bounded internally by a cylindrical surface 19, coaxial with axis 2 and of a diameter approximately equal to but no smaller than the outside diameter of percolating cup 6, and comprises two diametrically-opposite, axial grooves 20, each of which extends from surface 16 to surface 17, and is engaged in transversely sliding manner by a respective appendix 11 of percolating cup 6.

Finally, two sloping surfaces 21 are formed on surface 16, along the inner periphery of annular body 15, and at the top end of each groove 20, are symmetrical with respect to respective groove 20, and slope upwards from groove 20 towards sprinkler 5 at the same angle but in opposite directions. Each sloping surface 21 adjacent to one groove 20 is therefore diametrically opposite a corresponding sloping surface 21 adjacent to the other groove 20, and the two form a respective pair of sloping surfaces 21, which, together with appendixes 11, defines bayonet joint 12. Each sloping surface 21 in each pair is engaged, in use, by a respective appendix 11, and is bounded, at the opposite end to the one communicating with relative groove 20, by a respective radial shoulder 22 defining a stop for arresting relative appendix 11 along sloping surface 21.

In actual use, to insert percolating cup 6 inside annular body 15, the user positions percolating cup 6 - fully detached from annular body 15 (Figure 1) - beneath annular body 15, coaxially with axis 2, and with the two appendixes 11 aligned with grooves 20. When percolating cup 6 is moved vertically upwards by the user, each appendix 11 engages and slides along respective groove 20 to a level above the top end of groove 20.

At this point, when handle 13 is rotated clockwise or anticlockwise, one of the two pairs of opposite sloping surfaces 21 is engaged by appendixes 11, each of which slides along respective sloping surface 21 until it is arrested against respective shoulder 22, thus locking percolating cup 6 in the operating position.

In connection with the above, it should be pointed out that providing two pairs of sloping surfaces 21 allows handle 13 to be rotated by the user either clockwise or anticlockwise, depending on the space available and/or user preference.

In a variation not shown, the top end of each groove 20 communicates with the bottom end of only one sloping surface 21.

In a further variation not shown, percolating cup 6 has only one appendix 11, which cooperates with a respective groove 20 communicating with the bottom end of one or two sloping surfaces 21.

## Claims

1. A coffee percolator having a vertical axis (2) and comprising a pressurized-hot-water dispensing assembly (3) having an outlet (5) coaxial with said axis (2); a fixed annular body (15) coaxial with said axis (2) and positioned with a top surface (16) facing said outlet (5) and a bottom surface (17) facing away from said outlet (5); a percolating cup (6), which engages the annular body (15); and a bayonet joint (12) for connecting the percolating cup (6) to the annular body (15) coaxially with said axis (2) and facing said outlet (5); the percolator (1) being **characterized in that** the percolating cup (6) is so mounted as to be extractable axially through the annular body (15) and the bottom surface (17); and said bayonet joint (12) comprises at least one sloping surface (21) formed on said top surface (16).

2. A percolator as claimed in Claim 1, wherein said bayonet joint (12) comprises, for each said sloping surface (21), an appendix (11) extending radially outwards from said percolating cup (6), and an axial groove (20) formed on an inner surface of said annular body (15) and engaged in sliding manner by said appendix (11); said axial groove (20) being a through axial groove extending between said top and bottom surfaces (16, 17) to permit detachment of the percolating cup (6) from the annular body (15).

3. A percolator as claimed in Claim 2, wherein said axial groove (20) extends through said top surface (16) and is adjacent to a bottom end of said sloping surface (21).

4. A percolator as claimed in any one of the foregoing Claims, wherein said bayonet joint (12) comprises at least two said sloping surfaces (21) formed on said top surface (16) and diametrically opposite each other; and, for each said sloping surface (21), a through axial groove (20) formed on an inner surface (19) of said annular body (15), extending through said top surface (16), and adjacent to a bottom end of the relative sloping surface (21), and an appendix (11) projecting radially outwards from the percolating cup (6) and which engages said axial groove (20) in sliding manner.

5. A percolator as claimed in one of Claims 2 to 4, wherein said bayonet joint (12) comprises, for each said axial groove (20), two oppositely inclined said sloping surfaces (21) located on opposite sides of a top end of the relative axial groove (20); said two sloping surfaces (21) being engaged selectively by the relative said appendix (11).

6. A percolator as claimed in one of the foregoing Claims, wherein said sloping surface (21) is bounded at the top by a radial stop shoulder (22).

## Patentansprüche

1. Eine Kaffeemaschine, die eine vertikale Achse (2) aufweist und die eine einen mit der Achse (2) koaxialen Auslass (5) aufweisende Spenderanordnung (3) für unter Druck stehendes heißes Wasser; einen festen ringförmigen Körper (15), der koaxial mit der Achse (2) ist und der mit einer oberen Oberfläche (16), die dem Auslass (5) gegenüberliegt, und mit einer Unterseitenoberfläche (17), die von dem Auslass (5) weg zeigt, angeordnet ist; einem Filtriergefäß (6), das mit dem ringförmigen Körper (15) ineinander greift; und einen Bajonettanschluss (12) für die Verbindung des Filtriergefäß (6) mit dem ringförmigen Körper (15) koaxial mit der Achse (2) und dem Auslass (5) gegenüber liegend, umfasst; wobei die Kaffeemaschine **dadurch gekennzeichnet ist, dass** das Filtriergefäß (6) derart befestigt ist, dass es axial durch den ringförmigen Körper (15) und die Unterseitenoberfläche (17) herausnehmbar ist; und der Bajonettanschluss (12) wenigstens eine schräge Oberfläche (21), die auf der oberen Oberfläche (16) gebildet ist.

2. Kaffeemaschine gemäß Anspruch 1, wobei der Bajonettanschluss (12) für jede der schrägen Oberfläche (21) einen Fortsatz (11), der sich radial nach außen von dem Filtriergefäß (6) erstreckt, und eine axiale Einkerbung (20), die auf einer inneren Oberfläche des ringförmigen Körpers (15) gebildet ist und in einer gleitenden Art und Weise mit dem Fortsatz (11) einrastet, umfasst; wobei die axiale Einkerbung (20) eine axial durchgehende Einkerbung, die sich zwischen der oberen Oberfläche und Unterseitenoberfläche (16, 17) erstreckt, ist, um die Abnahme des Filtriergefäßes (6) von dem ringförmigen Körper (15) zu ermöglichen.

3. Kaffeemaschine gemäß Anspruch 2, wobei die axiale Einkerbung (20) sich durch die obere Oberfläche (16) erstreckt und an ein unteres Ende der schrägen Oberfläche (21) angrenzt.

4. Eine Kaffeemaschine gemäß einem der vorhergehenden Ansprüche, wobei der Bajonettanschluss (12) wenigstens zwei schräge Oberflächen (21), die auf der oberen Oberfläche (16) gebildet und diametral gegenüber liegend zueinander sind; und für jede der geneigten Oberfläche (21) eine axial durchgehende Einkerbung (20), die auf der inneren Oberfläche (19) des ringförmigen Körpers (15) gebildet ist, die sich durch die obere Oberfläche (16) erstreckt und die angrenzend an ein unteres Ende der zugehörigen schrägen Oberfläche (21) ist, und einen Fortsatz (11), der radial nach außen von dem Filtriergefäß (6) vorsteht und der mit der axialen Einkerbung (20) in einer gleitenden Art und Weise eingreift, umfasst.

5. Eine Kaffeemaschine gemäß einem der Ansprüche 2 bis 4, wobei der Bajonettanschluss (12) für jede der axialen Einkerbung (20) zwei entgegengesetzt geneigte schräge Oberflächen (21), die auf entgegengesetzten Seiten eines oberen Endes der zugehörigen axialen Einkerbung (20) angeordnet sind; wobei die zwei schrägen Oberflächen (21) wahlweise mit dem zugehörigen Fortsatz (11) einrasten, aufweist.

6. Eine Kaffeemaschine gemäß einem der vorhergehenden Ansprüche, wobei die schräge Oberfläche (21) an dem oberen Ende durch eine radiale Anschlagschulter (22) begrenzt ist.

## Revendications

1. Percolateur possédant un axe vertical (2) et comprenant un assemblage distributeur d'eau chaude sous pression (3) possédant une sortie (5) coaxiale par rapport audit axe (2) ; un corps annulaire fixe (15) coaxial par rapport audit axe (2) et placé de sorte que la surface supérieure (16) se trouve face à ladite sortie (5) et la surface inférieure (17) soit opposée à ladite sortie (5) ; un récipient de percolation (6), qui entraîne le corps annulaire (15) ; et un joint à baïonnette (12) qui relie le récipient de percolation (6) au corps annulaire (15) de façon coaxiale par rapport audit axe (2) et faisant face à ladite sortie (5) ; le percolateur (1) étant **caractérisé en ce que** le récipient de percolation (6) est placé de telle sorte à pouvoir être extrait de façon axiale à travers le corps annulaire (15) et la surface inférieure (17) ; et ledit joint à baïonnette (12) comprend au moins une surface en pente (21) formée sur ladite surface supérieure (16).

2. Percolateur selon la revendication 1, dans lequel ledit joint à baïonnette (12) comprend, pour chacune desdites surfaces en pente (21), une annexe (11) s'étendant de façon radiale vers l'extérieur dudit récipient de percolation (6) et une rainure axiale (20) située sur la surface interne dudit corps annulaire (15) et fixée de façon coulissante par ladite annexe (11) ; ladite rainure axiale (20) étant une rainure axiale traversante s'étendant entre lesdites surfaces supérieures et inférieures (16, 17) afin de permettre au récipient de percolation (6) de se détacher du corps annulaire (15).

3. Percolateur selon la revendication 2, dans lequel ladite rainure axiale (20) s'étend à travers ladite surface supérieure (16) et est adjacente à une extrémité inférieure de ladite surface en pente (21).

4. Percolateur selon l'une quelconque des revendications précédentes, dans lequel ledit joint à baïonnette (12) comprend au moins deux surfaces en pente (21) formées sur ladite surface supérieure (16) et diamétralement opposée l'une à l'autre ; et pour chacune desdites surfaces en pente (21), une rainure axiale traversante (20) formée sur une surface interne (19) dudit corps annulaire (15), s'étendant à travers ladite surface supérieure (16), et adjacente à l'extrémité inférieure de la surface en pente relative (21), et une annexe (11) s'étendant de façon radiale vers l'extérieur à partir du récipient de percolation (6) et qui entraîne ladite rainure axiale (20) de façon coulissante.

5. Percolateur selon l'une des quelconques revendications 2 à 4, dans lequel ledit joint à baïonnette (12) comprend pour chaque rainure axiale (20), lesdites deux surfaces en pente opposées (21) situées aux côtés opposés de l'extrémité supérieure de la rainure axiale relative (20) ; lesdites deux surfaces en pente (21) étant entraînées de manière sélective par ladite annexe relative (11).

6. Percolateur selon l'une quelconque des revendications précédentes, dans lequel le dessus de ladite surface en pente (21) est relié par un épaulement radial (22).
